# EUROPEAN PATENT SPECIFICATION

(11) **EP 3 443 144 B1**
(45) Date of publication and mention of the grant of the patent: **07.06.2023**
(21) Application number: 17781993.5
(22) Date of filing: 12.04.2017
(51) Int. Cl.: C25C 3/10, C25C 3/12, C25C 3/20, F16H 1/16, F16H 35/00

(54) **METHOD AND ADJUSTING DEVICE MECHANISM IN CONJUNCTION WITH AN ALUMINIUM SMELTER**
VERFAHREN UND VERSTELLVORRICHTUNG IN VERBINDUNG MIT EINEM ALUMINIUMSCHMELZER
PROCÉDÉ ET MÉCANISME POUR DISPOSITIF D'AJUSTEMENT, ASSOCIÉ À UN FONDEUR D'ALUMINIUM

(30) Priority: 14.04.2016 FI 20165322
(43) Date of publication of application: 20.02.2019
(73) Proprietor: Kumera Drives Oy, 11100 Riihimäki (FI)
(72) Inventor: TARULA, Vesa, 11100 Riihimäki (FI)
(74) Representative: Papula Oy
(86) International application number: PCT/FI2017/050276
(87) International publication number: WO 2017/178709

(56) References cited:
- CA-A- 1 125 233
- GB-A- 454 584
- US-A- 2 959 526
- US-A- 3 523 882
- US-A- 4 039 419
- US-A- 4 414 070
- US-A1- 2006 137 972

## Description

### FIELD OF THE INVENTION

The invention relates to a method and to a corresponding adjusting device mechanism for adjusting anodes used in the production of aluminium relative to corresponding fixed cathodes.

### BACKGROUND OF THE INVENTION

The production of aluminium by the Hall-Heroult process is based on an electrolytic process in which a high electric current is conducted through a molten alumina cryolite solution. The aluminium production cell consists of a carbon based cathode forming the base of the production tank, and carbon based anodes suspended at a suitable distance from the cathode, for example at approximately 2-5 cm. The anodes are quickly consumed and they must be adjusted on a continuous basis, so that an ideal distance to the cathode is maintained. In addition, the anodes are replaced after they have been fully consumed approximately every two weeks. The new anode is suspended from an adjusting structure at a suitable distance from the cathode, and it is then adjusted together with the other anodes consumed to different degrees.

The adjusting structure is typically a frame structure adjusted by an apparatus consisting of two or more anode jacks. Anode jacks are typically modified from the traditional screw jack consisting of a shaft having a trapezoidal thread and a bronze nut with a corresponding thread. Depending on the structure, either the screw or the nut is rotated to provide an axial lifting movement. The rotation is typically effected by means of a worm transmission integrated with the structure. One jack may be coupled with a driving motor, or alternatively one motor may synchronously rotate 2-8 jacks via intermediate shafts and an angle transmission.

Lifting screw drives are characterized by different power requirements for lifting and lowering movements. Depending on the pitch angle and friction of the thread of the screw, the screw can be self-retaining, i.e. capable of carrying a load without a retaining counter torque. Self-retention is achieved if the pitch angle is small or friction is sufficiently high. Self-retention is an important feature in the anode jack, and thus it is not relevant to improve the efficiency of the screw, which would be easily achievable for example with a ball screw drive.

Often, due to practical reasons the structure is self-retaining in static conditions, but under dynamic friction conditions, self-retention is not very strong. This feature causes problems particularly when the adjusting movement of the jack is descending. In this case, after adjusting is stopped, the stopping is slow, the motor's inertia bringing the load forward and the frictions braking slowly. In a normal system the downward stopping distance may be 5 to 10 fold as compared to the stopping distance in an upward drive. In practice, the difference for a lifting screw may be of the order of 1-2 mm.

The problem has always been present at some degree, and may have been circumvented by means of the control system, taking the difference into account in the control case by case. However, in the production of aluminium the problem hinders precise adjustment, the importance of which has increased due to new manufacturing technologies and environmental requirements, such that in order to reach more precise adjustment required by them, ever shorter adjusting movements are necessary. The problem is solved in some cases by an electric motor including an automatically operated retaining brake opened by the motor's drive voltage. Thus the brake always opens when to motor is driven and engages when the motor is turned off.

However, the so called brake motor cannot be used in all systems due to high ambient temperature, which may be up to 150 °C. A high magnetic field operating in the system also hinders the operation of electromagnetic brakes. Brakes also constitute an important item of expenditure in case of large plants where the number of motors may be up to 2000. With step motors this problem would not be present, but their application is limited due to high prices and environmental conditions. Document US-4414070-A discloses an anode positioning system.

Reducing the total efficiency of the jack and its driving machinery for example by decreasing the pitch of the screw, such that stopping of the downward drive would be desirably quick, causes problems at starting the movement and in the upward drive. In addition, decreasing the pitch of the screw leads to a smaller size of the thread, and weakens the load-carrying capacity and reduces the allowance for wear of the parts. Reducing the efficiency of the lifting screw by changing the geometry also leads to increase of the power requirement of the apparatus and has a negative effect on the manufacturing costs as sizing becomes more demanding.

### OBJECTIVE OF THE INVENTION

The objective of the invention is to overcome the shortcomings of the prior art mentioned above. Specifically, the objective of the invention is to disclose a new method and a corresponding adjusting mechanism, by means of which the efficiency difference characteristic of the lifting screw drive can be compensated for by changing the elements of the power transmission chain such that, particularly in the adjustment made in the lowering direction, the efficiency of the system can be reduced. This way, with different approaches as per case, the power requirement can be optimized to be as similar as possible in both driving directions.

### SUMMARY OF THE INVENTION

In the method according to the invention for operating an anode adjusting device mechanism of an aluminium smelter, an aluminium production cell being used comprises a cathode forming a base of the production tank, and an anode held at a suitable distance above the cathode by lifting and lowering the anode. According to the invention, some rotating part of the adjusting device mechanism being used in the method is braked when the anode is being lowered down. In addition, the bearing of the rotating part such as, for example, a toothed shaft, is so arranged as to allow small movement of the shaft in the axial direction when changing from lifting to lowering or from lowering to lifting of the anode. Thus, in the invention the axial force produced through helical toothing is made to press a friction surface of a brake structure coupled to the rotating part in the anode lowering direction, which brakes the rotating movement. However, in the lifting direction with an opposite axial force, the brake surfaces are separated from each other to the extent of said small movement, such that no braking is provided.

In a preferred embodiment, said rotating part comprises helical toothing or thread, such that when being rotated, the rotating part is also subjected to an axial force in different directions when lifting and lowering the anode.

Further, the invention relates to an anode adjusting device mechanism of an aluminium smelter, wherein an aluminium production cell comprises a cathode forming a base of the production tank, and an anode suspended at a suitable distance above the cathode. The adjusting device mechanism comprises a lifting screw carrying the anode being adjusted, i.e. lifted and lowered, a worm gear supporting the lifting screw, and a worm shaft rotating the worm gear and coupled with a suitable power device, generally an electric motor, for its rotation in both directions. According to the invention, the adjusting device mechanism comprises a brake mechanism coupled to the worm shaft for braking the worm shaft when the anode is being lowered. Thus, suitably the worm shaft is fitted with a bearing so as to rotate as well as to move in its axial direction to a small amount. In other words, the bearing has a small axial clearance enabling movement of the shaft in the axial direction when moving from lifting to lowering of the anode or vice versa. Further, the brake mechanism comprises a brake element supported to the worm shaft, and a friction material at a distance from it when the anode is being lifted. When the anode is being lowered, the brake element moves into contact with the friction material due to the axial movement of the shaft, implementing the braking according to the invention.

### ADVANTAGES PROVIDED BY THE INVENTION

The method and the corresponding adjusting device mechanism according to the invention bring important advantages as compared to the prior art. By means of the invention, moving the anode, i.e. lifting and lowering, and especially stopping after these movements, is rendered precise and identical from movements in both directions. Thus, irrespective of the direction of movement of the anode during adjustment, it is always provided with the same accuracy to a desired height relative to the cathode.

### BRIEF DESCRIPTION OF THE DRAWINGS

The invention will now be described in detail with reference to the accompanying drawings, in which
Fig. 1 shows a cross-section of a typical jack transmission,
Fig. 2 shows a cross-section of the jack of Fig. 1 from the top, such that the structure according to the invention is illustrated and
Fig. 3 shows an enlargement of the brake structure of Fig. 2.

### DETAILED DESCRIPTION OF THE INVENTION

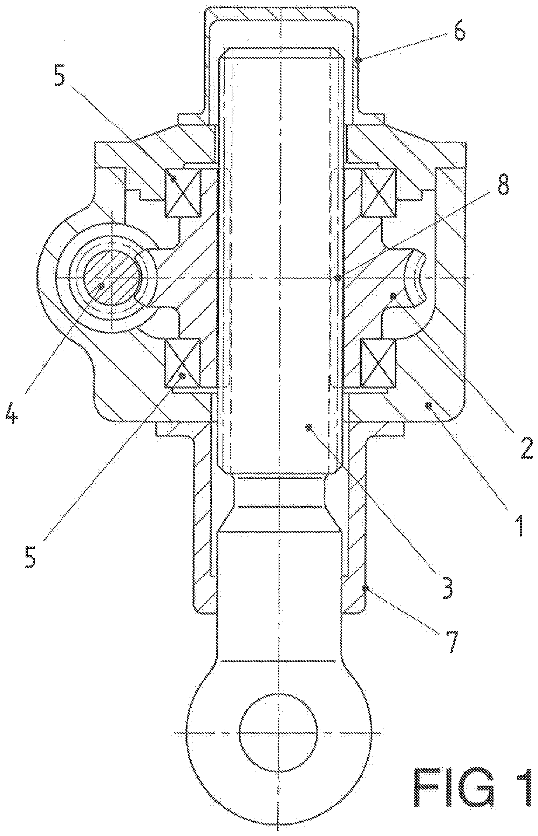

Fig. 1 shows a cross-section of a typical jack transmission which can be used in the production of aluminium when the position of an anode is being adjusted, i.e. when the anode is being lifted and lowered to a desired distance above the cathode. The transmission comprises a frame 1 inside which there is a lifting screw 3 movable in the longitudinal direction, to which the anode being adjusted is supported. The outer surface of the lifting screw has threads 8 supporting a matchingly threaded, lifting screw surrounding nut and a worm gear 2. The nut is fitted to the frame with bearings 5. The worm gear 2 is connected with a worm shaft 4 which is rotated in order to rotate the worm gear and lift or lower the lifting screw. The jack also comprises protecting tubes 6 and 7 of the lifting screw 3, inside which the lifting screw is mainly arranged to move.

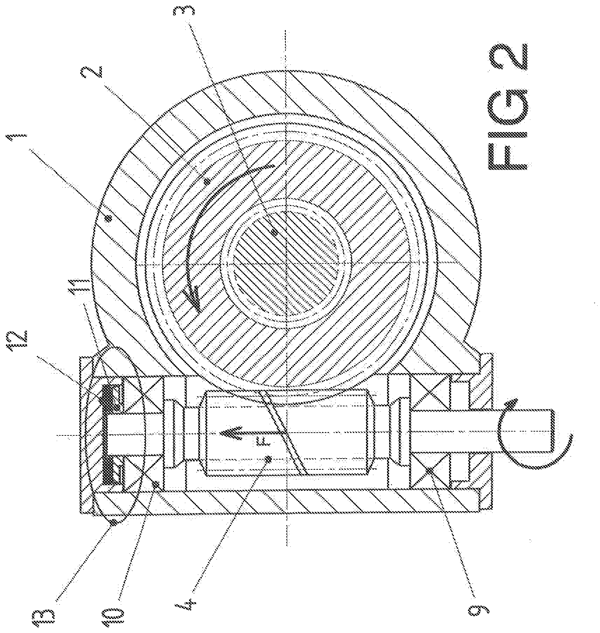

Fig. 2 shows a cross-section of the jack of Fig. 1 as seen from the top, such that it illustrates the worm shaft 4 with its bearings 9 and 10, and a brake structure 13 according to the invention positioned between the worm shaft and the frame and consisting of a brake element 11 supported to the shaft 4 and a friction material 12 supported to the frame.

The brake element 11 is an annular plate around the shaft 4 rigidly supported to it. The friction material 12 is positioned at the inner surface of a bearing case cover 14 in a plane parallel to the corresponding surface of the brake element and perpendicular relative to the axial direction of the worm shaft 4. When the brake is operating the brake element 11 is pressed against the friction material 12, the axial force F of the worm shaft 4 operating between them when the driving direction corresponds to lowering of the load, i.e. the anode. In the figure the toothing of the worm shaft is right-handed, the arrows showing the direction of rotation when the jack functions by lowering the load. In this case the bearings 9 and 10 carry the radial load caused in the shaft 4 by its worm toothing, and the brake structure 13 receives the axial load. When the force operates in the other direction, i.e. the jack is lifting the load, the shaft 4 moves to the direction of the changed tooth force to the extent of the bearing clearance, for example by approximately 0.1 mm, i.e., to such extent that the bearing 9 also starts to carry the axial load and a corresponding gap is formed between the brake element 11 and the friction material 12.

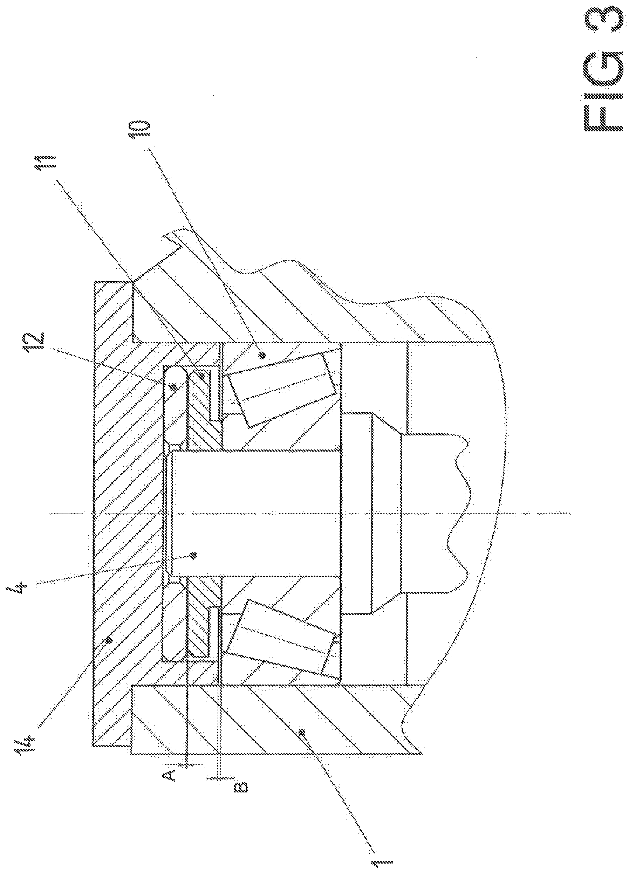

Fig. 3 shows an enlargement of the brake structure 13 of Fig. 2. The friction material 12 is positioned on the inner side of the bearing case cover 14, and the bearing case cover 14 is fixed to the frame 1. The annular brake element 11 is fixed around the shaft 4 in proximity to its end and rotates with the shaft on the bearing 10. The axial clearance B between the bearing 10 and the bearing case cover 14 is adjusted to be greater than the maximum distance A between the brake element 11 and the friction material 12. Typically the distance A is slightly greater than the play required for thermal expansion of the shaft, which is approximately 0.1 mm. The axial clearance of the bearing 10 may thus be for example approximately 0.15 mm, whereby practically all of the axial force when rotating the shaft in one direction is transmitted to the friction material 12.

The objective according to the invention may thus be achieved for example by making one or more shafts of the transmission such that within the range of the axial bearing clearance the axial force of the shaft is carried, when driving in the load-lifting direction, by means of the rolling bearing, but in the downward drive by means of special friction surfaces increasing the required power and thus stopping the device more quickly. This effect is achieved as it is known that for a worm shaft or a helically toothed cylindrical toothing shaft, the reaction direction of the axial force changes according to the direction of the load. A worm shaft suitable for this purpose is found inside the above-mentioned jack transmission, and suitable cylindrical toothing shafts are present in a motor transmission operating as a front transmission, used in multiple jack systems where the jacks are coupled as a unit operating in a synchronous manner by means of the above-mentioned intermediate shaft.

Generally the worm shaft of the jack is fitted with conical roller bearings at both ends, and corresponding bearings are also fitted on the shafts of the front transmissions. There is generally a small axial clearance of 0.05-0.15 mm in these types of bearings in order to allow elongation of the shaft due to thermal expansion. A small clearance in a low-angled conical roller bearing does not yet have a detrimental effect on the position of the shaft, even though the end with the axial load centres the shaft and the free end becomes looser and only gives support in the radial direction. This clearance, which may still be slightly enlargened, is utilized in the embodiment of this invention. In this case the worm shaft is coupled with a brake disc type flange or with a driving toothed gear in some structures. When the load is lifted by the jack or an upward movement is started, the shaft moves to the extent of the axial clearance, i.e. for example by approximately 0.15 mm in the direction opposite to the force arrow F in Fig. 2, whereby the friction pads fitted behind the brake disc or the toothed gear are just disengaged from the surface of the flange.

When the direction of the load changes and the shaft moves in the direction of the force arrow F, the friction pads start to carry the axial load, braking the driving and drawing power from the motor. The structure of the example where the power requirement for upward drive would normally correspond to 100% and the power requirement for downward drive to 30%, would give a braking power of 150% with the arrangement illustrated in the figure. By moving the friction material towards the inside or by reducing its coefficient of friction, the difference of the efficiencies of 70% is easily achieved as the friction power, such that the drive power becomes the same in both directions and adjustment of the anode system of the smelter is made more accurate.

The capacity of the structure to brake also depends on the transmission ratio of the transmission parts. Friction materials of clutches operating in an oil bath and using the maximum diameter, or alternatively friction pads made from bronze with a small diameter, give an approximately five-fold difference to the braking torques. By choosing a combination suitable for the particular case, it is possible in the majority of cases to cover the braking requirement with this method.

The bearings of the worm shaft may also be fitted such that one end is only provided with a radial bearing which may be for example a NU type cylindrical roller bearing. This enables free movement of the shaft in the direction of the friction surface, whereby wearing of the surfaces does not constitute a problem, as allowance for wearing can be provided to a notably larger extent than enabled by the axial clearance of conical bearings. In this type of structure, the other end of the shaft must be fitted with a bearing carrying the axial force in a lifting situation and the radial force in both situations. This is achieved with opposite conical bearings or angular ball bearings or alternatively for example with a floating cylindrical roller bearing and a separate axial bearing.

Using increased braking power in the structure causes heating and wearing of the parts. However, the use of anode jacks is characterized by very short adjusting movements of the order of 1-5 s, and long breaks of several minutes, even up to tens of minutes, between the adjusting movements, such that detrimental heating is not able to occur. The downward drive is normally never performed continuously over the whole distance with a full load. The upward drive, instead, is sometimes performed this way, but the friction system does not operate in this direction.

The invention has been described above by way of example with reference to the accompanying drawings; however, different embodiments of the invention are possible within the scope defined by the claims.

## Claims

1. A method for operating an anode adjusting device mechanism of an aluminium smelter, in which method an aluminium production cell being used comprises a cathode forming a base of the production tank, and an anode held at a suitable distance above the cathode by lifting and lowering the anode, and wherein some rotating part of the adjusting device mechanism is braked when the anode is being lowered down, **char**- **acterized** in that the bearing of the rotating part, such as a toothed shaft, allows movement of the shaft in the axial direction such that the axial force generated by the toothing presses a friction surface of a brake structure coupled to the rotating part in the anode lowering direction, braking the rotating movement.

2. The method according to claim 1, **characterized in that** the rotating part comprises helical toothing or thread, such that when being rotated, the rotating part is subjected to an axial force in different directions when lifting and lowering the anode.

3. The method according to claim 1 or 2, **characterized in that** a toothed shaft such as a worm shaft (4) is used as the rotating part.

4. An anode adjusting device mechanism of an aluminium smelter, wherein an aluminium production cell comprises a cathode forming a base of the production tank, and an anode suspended at a suitable distance above the cathode, the adjusting mechanism comprising a lifting screw (3) carrying the anode, a worm gear (2) supporting the lifting screw, and a worm shaft (4) rotating the worm gear (2) and coupled with a power device for its rotation in both directions, and wherein the adjusting device mechanism comprises a brake mechanism (13) coupled to the worm shaft (4) for braking the worm shaft when the anode is being lowered, **characterized in that** the worm shaft (4) is fitted with a bearing so as to rotate as well as to move in its axial direction to a small amount, the brake mechanism (13) comprising a brake element (11) supported to the worm shaft (4), and a friction material (12) at a distance from it when the anode is being lifted and engaged to the brake element due to said axial movement when the anode is being lowered.

5. The adjusting device mechanism according to claim 4, **characterized in that** said small amount is of the order of 0.15 mm.

## Patentansprüche

1. Verfahren zum Betreiben eines Anodenverstellvorrichtungsmechanismus eines Aluminiumschmelzers, wobei in dem Verfahren eine Aluminiumproduktionszelle genutzt wird, die eine Kathode, die eine Grundfläche des Produktionstanks ausbildet, und eine Anode, die durch Anheben und Absenken der Anode in einem geeigneten Abstand über der Kathode gehalten wird, aufweist, und wobei ein sich drehendes Teil des Verstellvorrichtungsmechanismus gebremst wird, wenn die Anode nach unten abgesenkt wird, **dadurch gekennzeichnet, dass** das Lager des sich drehenden Teils, wie etwa eine Zahnwelle, eine Bewegung der Welle in der axialen Richtung erlaubt, sodass die axiale Kraft, die durch die Verzahnung erzeugt wird, eine Reibungsfläche einer Bremsstruktur, die mit dem sich drehenden Teil gekoppelt ist, in die Anodenabsenkrichtung drückt und so die Drehbewegung bremst.

2. Verfahren nach Anspruch 1, **dadurch gekennzeichnet, dass** das sich drehende Teil ein(e) Spiralverzahnung oder -gewinde umfasst, sodass das sich drehende Teil, wenn es gedreht wird, beim Anheben und Absenken der Anode einer axialen Kraft in unterschiedlichen Richtungen ausgesetzt ist.

3. Verfahren nach Anspruch 1 oder 2, **dadurch gekennzeichnet, dass** eine Zahnwelle, wie etwa eine Schneckenwelle (4), als das sich drehende Teil genutzt wird.

4. Anodenverstellvorrichtungsmechanismus eines Aluminiumschmelzers, wobei eine Aluminiumproduktionszelle eine Kathode, die eine Grundfläche des Produktionstanks ausbildet, und eine Anode, die in einem geeigneten Abstand über der Kathode aufgehängt ist, umfasst, wobei der Verstellmechanismus eine Hebeschraube (3), welche die Anode trägt, ein Schneckenrad (2), das die Hebeschraube trägt, und eine Schneckenwelle (4), die das Schneckenrad (2) dreht und mit einer Antriebsvorrichtung für ihre Drehung in beide Richtungen gekoppelt ist, umfasst, und wobei der Verstellvorrichtungsmechanismus einen Bremsmechanismus (13) umfasst, der mit der Schneckenwelle (4) gekoppelt ist, um die Schneckenwelle zu bremsen, wenn die Anode abgesenkt wird, **dadurch gekennzeichnet, dass** die Schneckenwelle (4) so mit einem Lager versehen ist, dass sie sich dreht sowie in geringem Maße in ihrer axialen Richtung bewegt, wobei der Bremsmechanismus (13) ein Bremselement (11), das an der Schneckenwelle (4) getragen wird, und ein Reibungsmaterial (12), das sich in einem Abstand davon befindet, wenn die Anode angehoben wird, und aufgrund der axialen Bewegung mit dem Bremselement in Eingriff steht, wenn die Anode abgesenkt wird, umfasst.

5. Verstellvorrichtungsmechanismus nach Anspruch 4, **dadurch gekennzeichnet, dass** das geringe Maß in der Größenordnung von 0,15 mm liegt.

## Revendications

1. Procédé de fonctionnement d'un mécanisme de dispositif de réglage d'anode d'une aluminerie, dans lequel procédé, une cellule de production d'aluminium qui est utilisée comprend une cathode formant une base du réservoir de production, et une anode maintenue à une distance appropriée au-dessus de la cathode en soulevant et en abaissant l'anode, et dans lequel une certaine partie rotative du mécanisme de dispositif de réglage est freinée lorsque l'anode est abaissée, **caractérisé en ce que** le palier de la partie rotative, tel qu'un arbre denté, permet un mouvement de l'arbre dans la direction axiale de telle sorte que la force axiale générée par la denture appuie sur une surface de friction d'une structure de frein couplée à la partie rotative dans la direction d'abaissement d'anode, en freinant le mouvement de rotation.

2. Procédé selon la revendication 1, **caractérisé en ce que** la partie rotative comprend une denture hélicoïdale ou un filetage hélicoïdal, de sorte que lorsqu'elle est mise en rotation, la partie rotative est soumise à une force axiale dans différentes directions lors du levage et de l'abaissement de l'anode.

3. Procédé selon la revendication 1 ou 2, **caractérisé en ce qu'**un arbre denté tel qu'un arbre à vis sans fin (4) est utilisé en tant que partie rotative.

4. Mécanisme de dispositif de réglage d'anode d'une aluminerie, une cellule de production d'aluminium comprenant une cathode formant une base du réservoir de production, et une anode suspendue à une distance appropriée au-dessus de la cathode, le mécanisme de réglage comprenant une vis de levage (3) portant l'anode, un engrenage à vis sans fin (2) supportant la vis de levage, et un arbre à vis sans fin (4) faisant tourner l'engrenage à vis sans fin (2) et étant couplé à un dispositif de puissance pour sa rotation dans les deux directions, et le mécanisme de dispositif de réglage comprenant un mécanisme de frein (13) couplé à l'arbre à vis sans fin (4) pour freiner l'arbre à vis sans fin lorsque l'anode est abaissée, **caractérisé en ce que** l'arbre à vis sans fin (4) est équipé d'un palier de manière à tourner ainsi qu'à se déplacer dans sa direction axiale selon une petite quantité, le mécanisme de frein (13) comprenant un élément de frein (11) supporté sur l'arbre à vis sans fin (4), et un matériau de friction (12) à distance de celui-ci lorsque l'anode est soulevée et mise en prise avec l'élément de frein en raison dudit mouvement axial lorsque l'anode est abaissée.

5. Mécanisme de dispositif de réglage selon la revendication 4, **caractérisé en ce que** ladite petite quantité est de l'ordre de 0,15 mm.
